# EUROPEAN PATENT SPECIFICATION

(11) **EP 1 806 949 B1**
(45) Date of publication and mention of the grant of the patent: **06.10.2010**
(21) Application number: 07100117.6
(22) Date of filing: 04.01.2007
(51) Int. Cl.: H04W 76/02

(54) **System and method for preventing call from being dropped in mobile communication system**
System und Verfahren zum Verhindern von Anrufunterbrechungen in einem mobilen Kommunikationssystem
Système et procédé pour empêcher les coupures d'appels dans un système de communication mobile

(30) Priority: 06.01.2006 KR 20060001895
(43) Date of publication of application: 11.07.2007
(73) Proprietor: Samsung Electronics Co., Ltd., Suwon-si, Gyeonggi-do (KR)
(72) Inventor: Lee, Sang-Hyun, Yeongtong-gu Suwon-si Gyeonggi-do (KR); Choi, Yoon-Suk, Yeongtong-gu Suwon-si Gyeonggi-do (KR); Sung, Jo-En, Yeongtong-gu Suwon-si Gyeonggi-do (KR)
(74) Representative: Grünecker, Kinkeldey, Stockmair & Schwanhäusser Anwaltssozietät

(56) References cited:
- GRECAS C F ET AL: "Uninterrupted data transmission over GSM and application to health services" ELECTROTECHNICAL CONFERENCE, 2000. MELECON 2000. 10TH MEDITERRANEAN MAY 29-31, 2000, PISCATAWAY, NJ, USA,IEEE, vol. 1, 29 May 2000 (2000-05-29), pages 436-440, XP010518911 ISBN: 0-7803-6290-X
- "R GLOBAL SYSTEM FOR MOBILE COMMUNICATIONS Digital cellular telecommunications system (Phase 2+)" ETSI STANDARDS, EUROPEAN TELECOMMUNICATIONS STANDARDS INSTITUTE, SOPHIA-ANTIPO, FR, vol. SMG2, December 1996 (1996-12), XP014014755 ISSN: 0000-0001
- MOULY M ET AL: "SACCH PROCEDURES" GSM SYSTEM FOR MOBILE COMMUNICATIONS, LASSAY-LES-CHATEAUX, EUROPE MEDIA, FR, 1993, pages 420-423, XP002055504

## Description

The present invention relates to a mobile communication system, and more particularly to an apparatus and a method for preventing a call from being dropped in a Global System for Mobile (GSM) system.

A GSM system corresponds to a digital mobile telephone system using Time Division Multiple Access (TDMA) technology that is the most widely used digital wireless telephone technology together with Code Division Multiple Access (CDMA) technology. A GSM system digitizes and compresses data, and transmits the compressed data through one channel together with two different user data wherein respective data are transmitted in specific time zones.

Such a GSM system maps a logical channel to a physical channel such as an RF channel, a TDMA frame and a time slot. The logical channel may include a Traffic Channel (TCH) and a control channel such as a BCCH, a PCH, a RACH, a Slow Associated Control Channel (SACCH) and a FACCH. Herein, information including voice, data, etc., is transmitted through a TCH, and control signals between a Base Transceiver Station (BTS) and a plurality of Mobile Stations (MSs) are transmitted through a control channel.

A SACCH is a channel used to transmit/receive control information between one BTS and one MS, and is used for transmission/reception of system information and handoff-related information. A SACCH is used in connection with a TCH. An MS sends received signal quality information, Broadcast Channel (BCH) power measurement information, which corresponds to a set of logical channels of links used for synchronization with an adjacent cell, etc., to a BTS through a SACCH during communication. Further, a BTS sends transmitted signal power information of an MS, timing information, channel configuration information of a cell, etc., through a downlink SACCH during communication.

An MS and a BTS perform radio link control for communication while periodically exchanging the afore-described SACCH block during communication. If the SACCH block is not normally received, a call drop may occur because communication cannot be performed. Herein, a call drop represents that communication is interrupted by external conditions, instead of a user request, after an MS originates a call, a BTS assigns a voice channel, and the line of a trunk device in a Mobile Switching Center (MSC) is assigned to the call.

In conventional systems, an MS has a Radio Link Timeout (RLT) value for call drop determination, as in GSM Specification 05.08 5.2. That is, if the reception of a SACCH block is successful during communication, the RLT value increases by two. However, if the reception of the SACCH block fails during communication, the RLT value decreases by one, and the call is dropped when the RLT value becomes zero.

However, according to the conventional call drop method as described above, a call may also be dropped when a SACCH block is not temporarily received in an elevator, a tunnel, etc., instead of when a SACCH block cannot be generally received. Therefore, since a call may be dropped even when a user temporarily passes through an elevator, a tunnel, etc., the user must reconnect communication after passing through the elevator, the tunnel, etc. Grecas C.F. et al.: "Uninterrupted Date Transmission over GSM and Application to Health Services", 10th Mediterranean Electrotechnical Conference MEleCon 2000, vol. 1, pages 436 to 440 describes in one chapter the current GSM mechanisms. In more detail, in the GSM signaling regarding the routine maintenance of a radio link is carried out through conversations between the mobile station (MS) and the base transceiver station (BTS) over the slow associated control channel (SACCH). Every time a call is normally terminated or it is interrupted, because of bad link conditions, the session release process is activated. Actually, both the MS and the BTS monitor the loss of SACCH frames increasing a corresponding counter for every SACCH frame received and decoded, while decreasing it for every frame expected but not decoded. The value these counters are initialized is a characteristic of each cell and is referred in the specification as the RADIO_LINK_TIMEOUT parameter. The RADIO_LINK_TIMEOUT is transmitted by the cell's BTS on the base control channel (BCCH) or passed with an SACCH message to the MS, when it enters a new cell after a handover. A "hold transmission" mechanism for an unacknowledged transmission mode is introduced. It can be implemented using the counters of the SACCH frames. For these two counters, the threshold of the expected but not decoded SACCH blocks, allowed successively unlink or downlink, should be defined. Whenever this threshold is passed at one of the endpoints of the link (the MS or the BTS), the mechanism, that holds at this endpoint the transmission of bursts carrying user data, is activated. Only the transmission of the SACCH carrying bursts is permitted, necessary for link's quality evaluation. So, a possible handover decision is not barred, whilst the activation of the modified session release procedure is not excluded. Finally, a "keep up the connection active" mechanism is introduced. Here, a time interval is introduced which should be user defined. During this interval, and although either of the counters has reached zero value, the connection and the allocated resources are maintained, expecting the appearance of decodable SACCH messages. However, the expiry of this time causes the definite disconnection, if in the meantime the annulled counter has not attained a value that could permit the reliable data retransmission.

Accordingly, the present invention has been made to solve the above mentioned problems occurring in conventional systems.

It is the object to the present invention to provide an improved system and method for preventing a call from being dropped in a mobile communication system, which prevents a call from being dropped when an SACCH block is not temporarily received.

This object is solved by the subject matter of the independent claims. Preferred embodiments are defined in the dependent claims.

The present invention will be more apparent from the following detailed description taken in conjunction with the accompanying drawings, in which:
FIG. 1 is a block diagram illustrating the construction of a mobile communication system according to the present invention;
FIG. 2 is a flowchart illustrating a method for preventing a call from being dropped in a mobile communication system according to the present invention;
FIG. 3 is a flowchart illustrating a process for determining if an MS is in a temporal reception-impossible state according to the present invention;
FIG. 4A is a diagram illustrating measurement results according to the conventional systems; and
FIG. 4B is a diagram illustrating measurement results according to the present invention.

Preferred embodiments of the present invention will be described in detail herein below with reference to the accompanying drawings. It should be noted that the similar components are designated by similar reference numerals although they are illustrated in different drawings. Also, in the following description, a detailed description of known functions and configurations incorporated herein will be omitted when it may obscure the subject matter of the present invention.

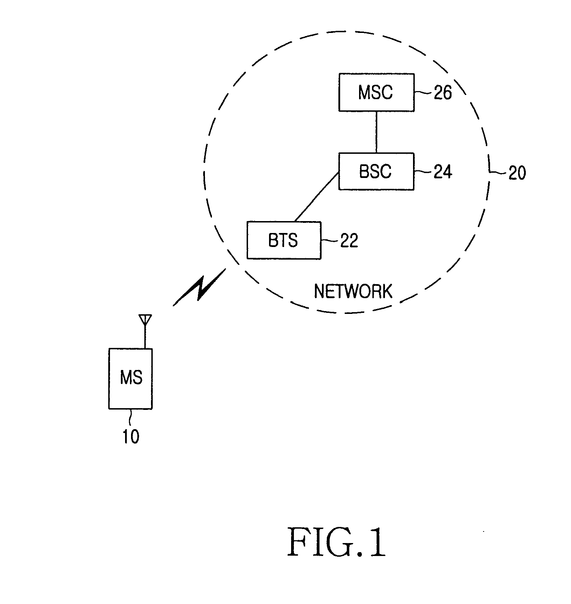

FIG. 1 is a block diagram illustrating the construction of a mobile communication system according to an embodiment of the present invention. Referring to FIG. 1, the mobile communication system according to the present invention includes an MS 10 and a network 20.

The MS 10 performs communication utilizing a SACCH block transmitted from a BTS 22, and determines if the MS 10 is in a temporal reception-impossible state when a call has been connected. The temporal reception-impossible state represents a state where the MS 10 temporarily cannot receive the SACCH block. For example, the temporal reception-impossible state may include a state where a RX_LEVEL rapidly falls below a threshold value as the MS 10 passes through an elevator, a tunnel, etc.

If the MS 10 is in the temporal reception-impossible state, the MS 10 enters a temporal reception-impossible mode, and reports the temporal reception-impossible mode to the network 20 through the BTS 22. Further, the MS 10 maintains an RLT value as a value before the temporal reception-impossible mode for a preset time period.

In other words, in the temporal reception-impossible mode, the MS 10 maintains an RLT value for a preset time period, instead of increasing or decreasing the RLT value according to whether a SACCH block has been successfully received. Then, if the preset time period passes, the MS 10 releases the temporal reception-impossible mode and increases or decreases the RLT value according to whether the SACCH block has been successfully received.

Herein, if a call is released before the preset time period has elapsed, the MS 10 increases or decreases the RLT value according to whether the SACCH block has been successfully received. Further, when communication is terminated by a user, a call may be released between the MS 10 and the network 20. Furthermore, when data are not received from the MS 10 for a preset time period, a call may be released to free network 20 resources.

The network 20 includes a BTS 22, a BSC 24 and an MSC 26. The MSC 26 takes charge of mobility management, location registration/management, authentication, handover, roaming, etc. The BSC 24 manages a plurality of BTSs 22, sets up a radio channel, and connects the BTS 22 and the MSC 26. The BTS 22 is connected to the BSC 24 and connects calls to the MS 10 through a radio link.

In a communication state, the above-described network 20 periodically transmits a SACCH block to the MS 10 through the BTS 22, thereby allowing call connection to be maintained. In a state in which the call connection has been maintained, if a temporal reception-impossible mode is reported from the MS 10, the network 20 determines that the MS 10 is in the temporal reception-impossible mode. If the network 20 determines that the MS 10 is in the temporal reception-impossible mode, the network 20 maintains a call with the MS 10 for a preset time period even when data are not received from the MS 10.

As described above, the network 20 and the MS 10 maintain a call for a preset time period even when a SACCH block is not temporarily received, thereby preventing the call from being dropped.

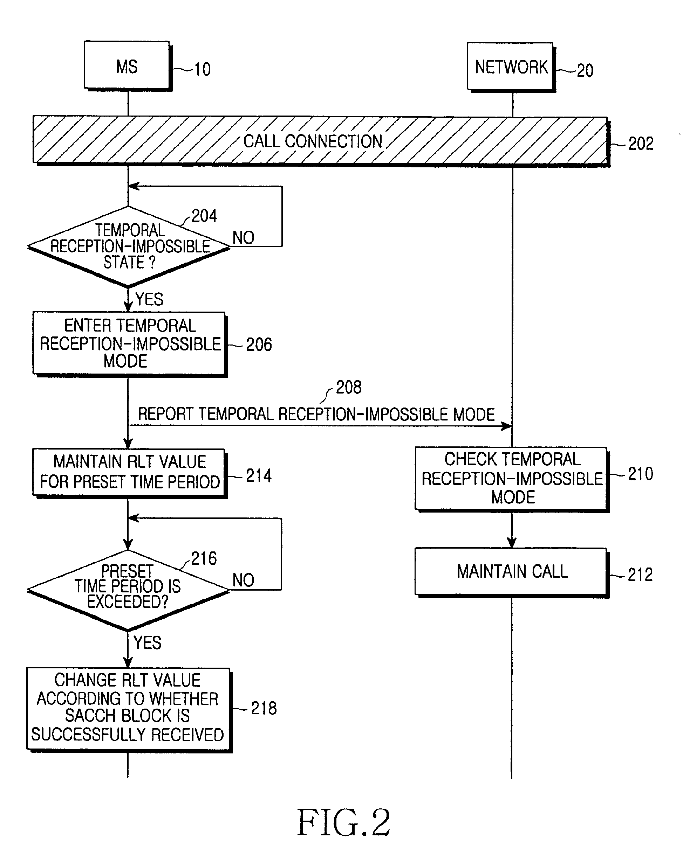

Hereinafter, a method for preventing a call from being dropped in the mobile communication system according to the present invention will be described in more detail. FIG. 2 is a flowchart illustrating the method for preventing a call from being dropped in the mobile communication system according to the present invention.

Referring to FIG. 2, the MS 10 and the network 20 connect a call according to the generation of the call, thereby communicating with each other in step 202. Herein, the MS 10 and the network 20 periodically transmit/receive a SACCH block, thereby communicating with each other.

During such communication, the MS 10 determines if the MS 10 is in a temporal reception-impossible state in step 204. The temporal reception-impossible state represents a state where the MS 10 temporarily cannot receive the SACCH block. For example, the temporal reception-impossible state may include a state where a RX_LEVEL rapidly falls below a threshold value, such as when the MS 10 passes through an elevator, a tunnel, etc.

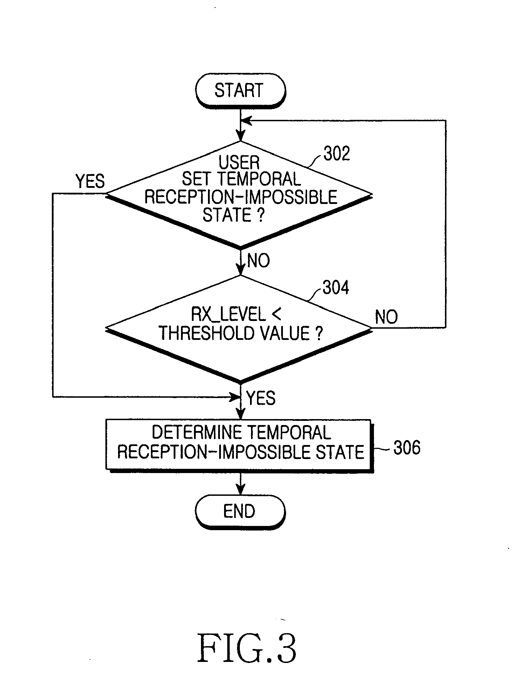

FIG. 3 is a flowchart illustrating a process for determining if the MS 10 is in the temporal reception-impossible state.

Referring to FIG. 3, in step 302, the MS 10 determines if a user sets the temporal reception-impossible state. Herein, when it is expected that the MS 10 is in the temporal reception-impossible state as the user passes the elevator, the tunnel, etc, the user can set the temporal reception-impossible state in the MS 10. If the user sets the temporal reception-impossible state, the MS 10 determines if the current state corresponds to the temporal reception-impossible state, in step 306.

However, if the user does not set the temporal reception-impossible state, the MS 10 determines if a RX_LEVEL falls below a threshold value in step 304. If the RX_LEVEL rapidly falls below the threshold value, step 306 is performed. However, if the RX_LEVEL does not fall below the threshold value, steps 302, 304 and 306 are repeated.

In this way, the MS 10 can determine if the current state corresponds to the temporal reception-impossible state.

Referring to FIG. 2 again, if the MS 10 determines that the current state corresponds to the temporal reception-impossible state, step 206 is performed. That is, the MS 10 enters a temporal reception-impossible mode.

In step 208, the MS 10 reports the temporal reception-impossible mode to the network 20. Herein, the MS 10 can report the temporal reception-impossible mode to the network 20 utilizing an existing measurement report message. The existing measurement report message corresponds to a message periodically transmitted from the MS 10 to the network 20 during communication, which includes measurement results.

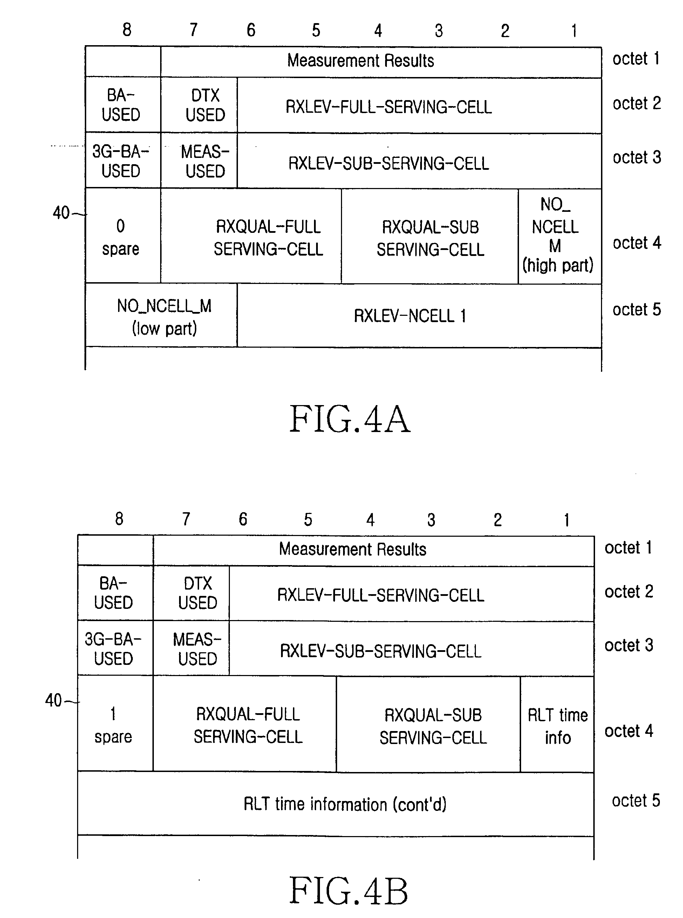

FIG. 4A is a diagram illustrating measurement results according to conventional systems, and FIG. 4B is a diagram illustrating measurement results according to the present invention.

Referring to FIG. 4A, bit 8 area 40 of octet 4 within the measurement results is a spare space (an empty space) having a value of 0, and by using total nine bits from bit 1 of the octet 4, information on a near cell is loaded in the bit 1 of the octet 4 and eight bits (bit 8 to bit 1) of octet 5.

Referring to FIG. 4B, according to the present invention, a value of 1 is set to the bit 8 area 40 of the octet 4 within the measurement results and the temporal reception-impossible mode is reported. Instead of information on a near cell, RLT time information is included using the total nine bits from the bit 1 of the octet 4 for RLT maintenance. Herein, a preset time period for RLT maintenance is discounted by the transmission period of the measurement report message and then included therein. For example, when the_transmission period (about 0.5 seconds) of the measurement report message is 104 frames, a preset time period may have a value of about 256 seconds (= 0.5 * 512 at maximum). Whenever the measurement report message is periodically transmitted, the preset time period is discounted by 0.5 seconds and then transmitted. This allows the time for the RLT maintenance to be understood even when the measurement report message is not occasionally transmitted because it is difficult to know the time for the RLT maintenance when the measurement report message is not transferred to the network 20.

Herein, the time for maintaining the RLT intact may use a value preset by a user, and a network reflects this fact to a measurement report for counting, as described above. Accordingly, even if the measurement report is not initially received, the network can become aware of time information, which has been requested by an MS, with only one time report.

After reporting the temporal reception-impossible mode to the network 20, the MS 10 maintains an RLT value for a preset time period in step 214 of Fig. 2. In other words, the MS 10 maintains an RLT value for the preset time period, instead of increasing or decreasing the RLT value according to whether the SACCH block has been successfully received.

In step 216, the MS 10 determines if the preset time period has been exceeded. If the preset time period has been exceeded, the MS 10 releases the temporal reception-impossible mode and increases or decreases the RLT value according to whether the SACCH block has been successfully received, in step 218.

Herein, if a call is released before the preset time period is exceeded, the MS 10 may increase or decrease the RLT value according to whether the SACCH block has been successfully received. Further, when communication is terminated by a user, a call may be released between the MS 10 and the network 20. Furthermore, when data are not received from the MS 10 during a preset time period, a call may be released to free network 20 resources.

In the meantime, if the temporal reception-impossible mode is reported from the MS 10, the network 20 determines that the MS 10 is in the temporal reception-impossible mode. If the network 20 determines that the MS 10 is in the temporal reception-impossible mode, the network 20 maintains a call with the MS 10 during a preset time period even when data are not received from the MS 10, in step 212.

According to the present invention as described above, a call is maintained during a preset time period when an MS is in a temporal reception-impossible state, e.g. when an MS temporarily cannot receive a SACCH block, so that a call can be prevented from being dropped.

Further, according to the present invention as described above, when a user expects a temporal reception-impossible state or when a RX_LEVEL rapidly deteriorates, it is possible to prevent a call from being dropped.

## Claims

1. A system adapted to prevent a call from being dropped in a mobile communication system, the system comprising:
a Mobile Station (10), MS, adapted to report (208) a temporal reception-impossible mode to a network (20) if the MS enters a temporal reception-impossible state (206) when a call has been connected, wherein the temporal reception-impossible state is a state where the MS temporarily cannot receive a Slow Associated Control Channel, SACCH, block, and maintain a Radio Link Timeout, RLT, value during a preset time period; and
the network adapted to maintain the call (212) with the MS during a preset time period after the temporal reception-impossible mode is reported from the MS;
wherein the MS is adapted to report the temporal reception-impossible mode to the network through a measurement report message (40);
wherein the MS is adapted to insert RLT value maintenance time for the temporal reception-impossible mode into a predetermined portion of the measurement report message, instead of information on a near cell; and
wherein, if the preset time period is exceeded (216) the MS is adapted to increase or decrease the RLT value (218) according to whether a SACCH block has been successfully received.

2. The system as claimed in claim 1, wherein the MS is adapted to determine the temporal reception-impossible state when a user sets the temporal reception-impossible state.

3. The system as claimed in claim 1, wherein the MS is adapted to determine the temporal reception-impossible state according to whether a RX_LEVEL rapidly falls below a threshold value.

4. The system as claimed in one of claims 1 to 3, wherein, if the call is released, the MS is adapted to increase or decrease the RLT value according to whether a SACCH block has been successfully received.

5. The system as claimed in claim 4, wherein the call is released at a user's communication termination request.

6. The system as claimed in claim 4, wherein the call is released to free network resources when data are not received from the MS during the preset time period.

7. A method for preventing a call from being dropped in a mobile communication system, the method comprising:
reporting (208) by a Mobile Station (10), MS, a temporal reception-impossible mode to a network (20) if the MS enters a temporal reception-impossible state when a call has been connected, wherein the temporal reception-impossible state is a state where the MS temporarily cannot receive a Slow Associated Control Channel, SACCH, block, and maintaining (214) a Radio Link Timeout, RLT, value during a preset time period;
maintaining (212) by the network the call with the MS during a preset time period after the temporal reception-impossible mode is reported from the MS; and
if the preset time period is exceeded (216), increasing (218) or decreasing (218) by the MS the RLT value according to whether a SACCH block has been successfully received;
wherein the MS is adapted to report the temporal reception-impossible mode to the network through a measurement report message (40); and
wherein the MS is adapted to insert RLT value maintenance time for the temporal reception-impossible mode into a predetermined portion of the measurement report message, instead of information on a near cell.

8. The method as claimed in claim 7, further comprising, when a user sets the temporal reception-impossible state, determining by the MS the temporal reception-impossible state.

9. The method as claimed in claim 7, further comprising determining by the MS the temporal reception-impossible state according to whether a RX_LEVEL rapidly falls below a threshold value.

10. The method as claimed in claim 7, further comprising, if the call is released, increasing or decreasing by the MS the RLT value according to whether the SACCH block has been successfully received.

11. The method as claimed in claim 10, wherein the call is released at a user's communication termination request.

12. The method as claimed in claim 10, wherein the call is released to free network resources when data are not received from the MS during a preset time period.

13. The method of claim 7, further comprising:
determining if the MS enters a temporal reception-impossible state when a call has been connected.

14. The method as claimed in claim 13, wherein the determining step comprises:
determining if a user sets the temporal reception-impossible state; and
if the user sets the temporal reception-impossible state, determining a current state as the temporal reception-impossible state.

15. The method as claimed in claim 13, wherein the determining step comprises:
determining if a RX_LEVEL rapidly falls below a threshold value; and
if the RX_LEVEL rapidly falls below the threshold value, determining a current state as the temporal reception-impossible state.

16. The method as claimed in one of claims 13 to 15, wherein the reporting step comprises:
setting a value, which indicates the temporal reception-impossible mode, in an empty space of the measurement report message;
inserting RLT value maintenance time for the temporal reception-impossible mode into the predetermined portion of the measurement report message, instead of information on a near cell; and
transmitting the measurement report message including the value and the RLT value maintenance time to the network.

## Patentansprüche

1. System, das so eingerichtet ist, dass es verhindert, dass eine Verbindung in einem Mobilkommunikationssystem abgebrochen wird, wobei das System umfasst:
eine Mobilstation (10), die so eingerichtet ist, dass sie einem Netzwerk (20) einen Modus meldet (208), in dem vorübergehend kein Empfang möglich ist, wenn die Mobilstation in einen Zustand eintritt (206), in dem vorübergehend kein Empfang möglich ist,
wenn eine Verbindung hergestellt worden ist, wobei der Zustand, in dem vorübergehend kein Empfang möglich ist, ein Zustand ist, in dem die Mobilstation einen SACCH-Block (Slow Associated Control Channel block) vorübergehend nicht empfangen kann, und die so eingerichtet ist, dass sie einen RLT-Wert (Radio Link Timeout value) während eines vorgegebenen Zeitraums aufrechterhält; und
das Netzwerk, das so eingerichtet ist, dass es die Verbindung (212) mit der Mobilstation während eines voreingestellten Zeitraums aufrechterhält, nachdem der Modus, in dem vorübergehend kein Empfang möglich ist, von der Mobilstation gemeldet wird;
wobei die Mobilstation so eingerichtet ist, dass sie den Modus, in dem vorübergehend kein Empfang möglich ist, dem Netzwerk über eine Messbericht-Nachricht (40) meldet;
wobei die Mobilstation so eingerichtet ist, dass sie eine Zeit zum Aufrechterhalten des RLT-Wertes für den Modus, in dem vorübergehend kein Empfang möglich ist, anstelle einer Information über eine nahe gelegene Zelle in einen vorgegebenen Abschnitt der Messbericht-Nachricht einfügt; und
wobei die Mobilstation so eingerichtet ist, dass sie, wenn der voreingestellte Zeitraum überschritten wird (216), den RLT-Wert (218) in Abhängigkeit davon erhöht oder erniedrigt, ob ein SACCH-Block erfolgreich empfangen worden ist.

2. System nach Anspruch 1, wobei die Mobilstation so eingerichtet ist, dass sie den Zustand, in dem vorübergehend kein Empfang möglich ist, feststellt, wenn ein Benutzer den Zustand einstellt, in dem vorübergehend kein Empfang möglich ist.

3. System nach Anspruch 1, die Mobilstation so eingerichtet ist, dass sie den Zustand, in dem vorübergehend kein Empfang möglich ist, in Abhängigkeit davon feststellt, ob ein RX_LEVEL schnell unter einen Schwellenwert fällt.

4. System nach einem der Ansprüche 1 bis 3, wobei die Mobilstation so eingerichtet ist, dass sie, wenn die Verbindung freigegeben wird, den RLT-Wert in Abhängigkeit davon erhöht oder erniedrigt, ob ein SACCH-Block erfolgreich empfangen worden ist.

5. System nach Anspruch 4, wobei die Verbindung auf eine Anforderung eines Benutzers zum Beenden von Kommunikation hin freigegeben wird.

6. System nach Anspruch 4, wobei die Verbindung freigegeben wird, um Netzwerk-Ressourcen freizusetzen, wenn während des voreingestellten Zeitraums keine Daten von der Mobilstation empfangen werden.

7. Verfahren, mit dem verhindert wird, dass eine Verbindung in einem Mobilkommunikationssystem abgebrochen wird, wobei das Verfahren umfasst:
Melden (208) eines Modus, in dem vorübergehend kein Empfang möglich ist, durch eine Mobilstation (10) an ein Netzwerk (20), wenn die Mobilstation in einen Zustand übergeht, in dem vorübergehend kein Empfang möglich ist, wenn eine Verbindung hergestellt worden ist, wobei der Zustand, in dem vorübergehend kein Empfang möglich ist, ein Zustand ist, in dem die Mobilstation einen SACCH-Block (Slow Associated Control Channel block) vorübergehend nicht empfangen kann, und Aufrechterhalten (214) eines RLT-Wertes (Radio Link Timeout value) während eines voreingestellten Zeitraums;
Aufrechterhalten (212) der Verbindung mit der Mobilstation durch das Netzwerk während eines voreingestellten Zeitraums, nachdem der Modus, in dem vorübergehend kein Empfang möglich ist, von der Mobilstation gemeldet wird; und
wenn der voreingestellte Zeitraum überschritten wird (216), Erhöhen (218) oder Erniedrigen (218) des RLT-Wertes durch die Mobilstation in Abhängigkeit davon, ob ein SACCH-Block erfolgreich empfangen worden ist;
wobei die Mobilstation so eingerichtet ist, dass sie den Modus, in dem vorübergehend kein Empfang möglich ist, dem Netzwerk über eine Messbericht-Nachricht (40) meldet; und
wobei die Mobilstation so eingerichtet ist, dass sie die Zeit zum Aufrechterhalten des RLT-Wertes für den Modus, in dem vorübergehend kein Empfang möglich ist, anstelle
einer Information über eine nahe gelegene Zelle in einen vorgegebenen Abschnitt in der Messbericht-Nachricht einfügt.

8. Verfahren nach Anspruch 7, das des Weiteren umfasst, dass der Zustand, in dem vorübergehend kein Empfang möglich ist, durch die Mobilstation festgestellt wird, wenn ein Benutzer den Zustand einstellt, in dem vorübergehend kein Empfang möglich ist.

9. Verfahren nach Anspruch 7, das des Weiteren umfasst, dass der Zustand, in dem vorübergehend kein Empfang möglich ist, durch die Mobilstation in Abhängigkeit davon festgestellt wird, ob ein RX_LEVEL schnell unter einen Schwellenwert fällt.

10. Verfahren nach Anspruch 7, das des Weiteren umfasst, dass, wenn die Verbindung freigegeben wird, der RLT-Wert durch die Mobilstation in Abhängigkeit davon erhöht oder erniedrigt wird, ob der SACCH-Block erfolgreich empfangen worden ist.

11. Verfahren nach Anspruch 10, wobei die Verbindung auf eine Anforderung eines Benutzers zum Beenden von Kommunikation hin freigegeben wird.

12. Verfahren nach Anspruch 10, wobei die Verbindung freigegeben wird, um Netzwerk-Ressourcen freizusetzen, wenn während eines vorgegebenen Zeitraums keine Daten von der Mobilstation empfangen werden.

13. Verfahren nach Anspruch 7, das des Weiteren umfasst:
Feststellen, ob die Mobilstation in einen Zustand übergeht, in dem vorübergehend kein Empfang möglich ist, wenn eine Verbindung hergestellt worden ist.

14. Verfahren nach Anspruch 13, wobei der Feststellschritt umfasst:
Feststellen, ob ein Benutzer den Zustand einstellt, indem vorübergehend kein Empfang möglich ist; und
wenn der Benutzer den Zustand einstellt, in dem vorübergehend kein Empfang möglich ist, Bestimmen eines aktuellen Zustandes als den Zustand, in dem vorübergehend kein Empfang möglich ist.

15. Verfahren nach Anspruch 13, wobei der Feststellschritt umfasst:
Feststellen, ob ein RX_LEVEL schnell unter einen Schwellenwert fällt; und
wenn der RX_LEVEL schnell unter den Schwellenwert fällt, Bestimmen eines aktuellen Zustandes als den Zustand, in dem vorübergehend kein Empfang möglich ist.

16. Verfahren nach einem der Ansprüche 13 bis 15, wobei der Meldeschritt umfasst:
Einstellen eines Wertes, der den Modus anzeigt, in dem vorübergehend kein Empfang möglich ist, in einem leeren Raum der Messbericht-Nachricht;
Einfügen einer Zeit zum Aufrechterhalten des RLT-Wertes für den Modus, in dem vorübergehend kein Empfang möglich ist, in den vorgegebenen Abschnitt der Messbericht-Nachricht anstelle einer Information über eine nahe gelegene Zelle; und
Senden der Messbericht-Nachricht einschließlich des Wertes und der Zeit zum Aufrechterhalten des RLT-Wertes zu dem Netzwerk.

## Revendications

1. Système adapté pour empêcher une interruption d'appel dans un système de communication mobile, le système comprenant :
une station mobile (10), soit Mobile Station ou MS, adaptée pour notifier (208) à un réseau (20) un mode temporel de réception impossible si la MS entre en état temporel de réception impossible (206) lorsqu'un appel a été établi, dans lequel l'état temporel de réception impossible est un état dans lequel la MS ne peut temporairement pas recevoir un bloc de canal de contrôle associé lent, soit Slow Associated Control Channel ou SACCH, et conserve une valeur de délai d'arrêt de liaison radio, soit Radio Link Timeout ou RLT, durant une période temporelle préétablie ; et
le réseau est adapté pour maintenir l'appel (212) avec la MS pendant une période temporelle préétablie après que le mode temporel de réception impossible est notifié par la MS ;
dans lequel la MS est adaptée pour notifier le mode temporel de réception impossible au réseau via un message de compte rendu de mesure (40) ;
dans lequel la MS est adaptée pour insérer un temps de maintien de valeur RLT pour le mode temporel de réception impossible dans une partie prédéterminée du message de compte rendu de mesure, au lieu d'informations concernant une cellule voisine ; et
dans lequel, si la période temporelle préétablie est dépassée (216), la MS est adaptée pour accroître ou décroître la valeur RLT (218) selon qu'un bloc SACCH a été réceptionné ou non avec succès.

2. Système selon la revendication 1, dans lequel la MS est adaptée pour déterminer l'état temporel de réception impossible lorsqu'un utilisateur établit l'état temporel de réception impossible.

3. Système selon la revendication 1, dans lequel la MS est adaptée pour déterminer l'état temporel de réception impossible selon qu'un niveau RX, soit RX_LEVEL, tombe ou non rapidement sous une valeur seuil.

4. Système selon l'une quelconque des revendications 1 à 3, dans lequel si l'appel est libéré, la MS est adaptée pour accroître ou décroître la valeur RLT selon qu'un bloc SACCH a été réceptionné ou non avec succès.

5. Système selon la revendication 4, dans lequel l'appel est libéré lors d'une demande d'arrêt de communication par un utilisateur.

6. Système selon la revendication 4, dans lequel l'appel est libéré pour libérer des ressources du réseau lorsque des données provenant de la MS ne sont pas réceptionnées pendant une période temporelle préétablie.

7. Procédé adapté pour empêcher une interruption d'appel dans un système de communication mobile, le procédé comprenant :
la notification (208) par une station mobile MS (10) à un réseau (20) d'un mode temporel de réception impossible si la MS entre en état temporel de réception impossible lorsqu'un appel a été établi, dans lequel l'état temporel de réception impossible est un état dans lequel la MS ne peut temporairement pas recevoir un bloc de canal de contrôle associé lent, soit Slow Associated Control Channel ou SACCH, et le maintien (214) d'une valeur de délai d'arrêt de liaison radio RLT durant une période temporelle préétablie ;
le maintien (212) par le réseau de l'appel avec la MS pendant une période temporelle préétablie après que le mode temporel de réception impossible est notifié par la MS ; et
si la période temporelle préétablie est dépassée, (216) l'accroissement (218) ou le décroissement (218) par la MS de la valeur RLT selon qu'un bloc SACCH a été réceptionné ou non avec succès ;
dans lequel la MS est adaptée pour notifier le mode temporel de réception impossible au réseau via un message de compte rendu de mesure (40) ; et
dans lequel la MS est adaptée pour insérer un temps de maintien de valeur RLT pour le mode temporel de réception impossible dans une partie prédéterminée du message de compte rendu de mesure, au lieu d'informations concernant une cellule voisine.

8. Procédé selon la revendication 7, comprenant en outre, lorsqu'un utilisateur établit l'état temporel de réception impossible, la détermination par la MS de l'état temporel de réception impossible.

9. Procédé selon la revendication 7, comprenant en outre la détermination par la MS de l'état temporel de réception impossible selon que le niveau RX_LEVEL tombe ou non rapidement sous une valeur seuil.

10. Procédé selon la revendication 7, comprenant en outre, si l'appel est libéré, l'accroissement ou le décroissement par la MS de la valeur RLT selon qu'un bloc SACCH a été réceptionné ou non avec succès.

11. Procédé selon la revendication 10, dans lequel l'appel est libéré lors d'une demande d'arrêt de communication par un utilisateur.

12. Procédé selon la revendication 10, dans lequel l'appel est libéré pour libérer des ressources du réseau lorsque des données provenant de la MS ne sont pas réceptionnées pendant une période temporelle préétablie.

13. Procédé selon la revendication 7, comprenant en outre :
la détermination du fait que la MS entre en état temporel de réception impossible lorsqu'un appel a été établi.

14. Procédé selon la revendication 13, dans lequel l'étape de détermination comprend :
la détermination du fait qu'un utilisateur établit l'état temporel de réception impossible ; et
si l'utilisateur établit l'état temporel de réception impossible, la détermination de l'état actuel comme état temporel de réception impossible.

15. Procédé selon la revendication 13, dans lequel l'étape de détermination comprend :
la détermination du fait que le niveau RX_LEVEL tombe rapidement sous une valeur seuil ; et
si le niveau RX_LEVEL tombe rapidement sous la valeur seuil, la détermination de l'état actuel comme état temporel de réception impossible.

16. Procédé selon l'une des revendications 13 à 15, dans lequel l'étape de compte rendu comprend :
l'établissement d'une valeur indiquant le mode temporel de réception impossible dans une espace vide du message de compte rendu de mesure ;
l'insertion d'un temps de maintien de valeur RLT pour le mode temporel de réception impossible dans la partie prédéterminée du message de compte rendu de mesure, au lieu d'informations concernant une cellule voisine ; et
la transmission au réseau du message de compte rendu de mesure, comprenant la valeur et le temps de maintien de valeur RLT.
